# EUROPÄISCHE PATENTSCHRIFT

(11) **EP 0 461 515 B1**
(45) Veröffentlichungstag und Bekanntmachung des Hinweises auf die Patenterteilung: **30.03.1994**
(21) Anmeldenummer: 91109070.2
(22) Anmeldetag: 04.06.1991
(51) Int. Cl.: B01D 19/00, B01F 3/04, C02F 1/02, C02F 1/20

(54) **Apparat zur Aufwärmung und Entgasung von Wasser**
Device for treating and degasifying of water
Dispositif de chauffage et de dégazage de l'eau

(30) Priorität: 11.06.1990 CH 1949/90
(43) Veröffentlichungstag der Anmeldung: 18.12.1991
(73) Patentinhaber: ASEA BROWN BOVERI AG, 5400 Baden (CH)
(72) Erfinder: Youssef, Mustafa, Dr., CH-8046 Zürich (CH)

(56) Entgegenhaltungen:
- DE-B- 1 001 686
- FR-A- 1 167 397
- GB-A- 802 149

## Beschreibung

Die Erfindung betrifft einen Apparat zur Aufwärmung und Entgasung von Wasser mittels Dampf, im wesentlichen bestehend aus einer in einem Gehäuse untergebrachten Kolonnenanordnung, mit einer oberhalb der Kolonnenanordnung ins Gehäuse mündenden Wasserzufuhrleitung für das aufzuheizende und zu entgasende Wasser, sowie mit je einer ins Gehäuse mündenden Dampfzufuhrleitung für den Heizdampf und Entlüftungsleitung für das abzusaugende Gas/Dampfgemisch

Derartige Apparate können im Kraftwerksbau zum Entgasen des Kondensats angewendet werden. In modernen Kraftwerkanlagen, besonders bei Kombi-Typen ist der Verbrauch von aufbereitetem Wasser sehr gross (15 % und noch mehr). Das verbrauchte Wasser wird mit kaltem Zusatzwasser ersetzt, welches in der Regel einen grossen Luftgehalt aufweist. Dies bedingt grosse Aufwärmungs- und Entgasungsleistungen.

Einen anderen wichtigen Fall stellen die Anlagen dar, die Prozessdampf erzeugen. Das von Wärmeaustauschern, Reaktoren Heizern etc. zurückfliessende Kondensat enthält meistens grosse Mengen an gelöster Luft. In vielen Fällen wird auch luftgesättigtes Zusatzwasser (Regenwasser) beigemischt.

Bekannt im Zusammenhang mit der Entgasung von Flüssigkeiten sind Austauschsäulen bzw. Kolonnen, in denen der Dampf und die Flüssigkeit eines Gemisches im Gegenstrom, im Kreuz-Gegenstrom oder im Gleichstrom zueinander geführt werden (LUEGER, Band 16, Lexikon der Verfahrenstechnik, Vierte Auflage, Deutsche Verlags-Anstalt Stuttgart, Seite 51). In diesen Kolonnen werden die Flüssigkeit und der Dampf eines zu trennenden Gemisches so im Gegenstrom oder im Gleichstrom zueinander geführt, dass sich beide Phasen zum Stoffaustausch und zum Wärmeaustausch möglichst innig berühren.

Die Verwendung einer Entgasersäule in Gegenstromschaltung ist zum Erzielen einer maximalen Trennarbeit bei einer bestimmten Säulenhöhe grundsätzlich richtig. Grössere Kondensatströme mit grösserer Unterkühlung bringen jedoch bei einer Gegenstromschaltung das Problem mit sich, dass ein sehr grosser Anteil des Dampfes den unteren Teil der Säule überwinden muss (Ueberflutung der Packung wegen grösserer Dampfbelastung), ohne signifikante Wirkung für die stoffkinetische Trennarbeit, die im unteren Teil der Säule geschieht, da die Aufwärmung und der Sättigungsprozess des Kondensates im oberen Teil stattfinden. Die Folge einer solchen konstruktiven Lösung ist jedoch, dass der Durchmesser der Säule enorm erhöht werden muss, um die Ueberflutung der Packung zu verhindern, mit beträchtlichen Mehrkosten für den Apparat.

Bei grosser Aufwärmleistung und kleiner notwendiger Entgasungsleistung können Entgaser mit Gleichstromschaltung eingesetzt werden. Der Vorteil dieser Schaltung liegt darin, dass der notwendige grosse Dampfstrom direkt oben im Mischraum, wo die Aufwärmung des Kondensates geschieht, eingeführt wird. Durch die Gleichstromsäule strömt neben dem vorgewärmten Kondensat der Spüldampf. Damit erlaubt diese Schaltung eine grosse Aufwärmung des Kondensates ohne Ueberflutungsgefahr. Der Nachteil der Gleichstromschaltung liegt darin, dass keine grosse Entgasungsleistung erreicht werden kann.

Aus der EP-A-0 425 941, welche einen Stand der Technik nach Art. 54(3) EPÜ darstellt, ist ein Apparat zur Entgasung und Aufwärmung von Wasser mittels Dampf bekannt. Er besteht im wesentlichen aus einer Kolonne mit darin angeordneten Füllkörpern, mit einem am Kolonnenkopf angeordnetem Verteiler für das zu entgasende Wasser, mit je einer stromaufwärts der Kolonne angeordneten Wasserzufuhrleitung und Dampfzufuhrleitung, und mit je einer stromabwärts der Kolonne angeordneten Wasserabführleitung und Entlüftungsleitung für das abzusaugende Gas/Dampf-Gemisch. Die vier Leitungen münden in Gehäuse, die oberhalb und unterhalb der vorzugsweise zylindrischen Kolonne mit dieser verbunden sind. Stromaufwärts des Verteilers ist ein kegelförmiger Mischraum vorgesehen, in welchen das zu entgasende Wasser über Düsen eingespritzt wird.

Der Erfindung liegt die Aufgabe zugrunde, einen neuen Hochleistungsentgaser mit sowohl grosser Aufwärmungsleistung als auch grosser Entgasungsleistung zu konzipieren.

Erfindungsgemäss wird dies dadurch erreicht,
- dass die Dampfzufuhrleitung ebenfalls oberhalb der Kolonnenanordnung im Gehäuse angeordnet ist und in einen Mischraum mündet, in dem Sprühmittel für das Wasser vorgesehen sind;
- dass unterhalb des Mischraumes eine erste im Gleichstrom beaufschlagte Kolonne angeordnet ist;
- dass in Wasserfliessrichtung gesehen, unterhalb der ersten Kolonne eine zweite Kolonne vorgesehen ist;
- dass unterhalb der zweiten Kolonne eine Spüldampfzufuhrleitung in das Gehäuse mündet, so dass die zweite Kolonne im Gegenstrom beaufschlagt ist;
- und dass die Entlüftungsleitung zwischen den beiden Kolonnen in das Gehäuse mündet.

Der neue Entgasertyp weist die folgenden Vorteile auf:
- Durch den Einsatz einer Gleichstrom-Kolonne und die Anordnung der Dampfeinführung oberhalb dieser Kolonne bietet der neue Entgasertyp eine grössere Aufwärmung des Wassers, ohne die Gefahr der Flutgrenze, welche in den herkömmlichen Gegenstrom-Entgasern mit Heizdampfeinführung unterhalb der Gegenstrom-Kolonne erreicht werden kann. Damit ist ein stabiles hydraulisches Verhalten bei grösseren Heizdampfströmen gewährleistet.
- Durch die Zuführung des Heizdampfes oberhalb der Gleichstrom-Kolonne kondensiert der grösste Teil des Heizdampfes bereits durch Berührung mit Wasser im Dampfraum. Damit ergibt sich eine niedrigere Dampfbelastung in der Gleichstrom-Kolonne. Ebenfalls ergibt sich eine niedrigere Dampfbelastung in der unteren Gegenstrom-Kolonne, da in dieser Kolonne nur der kleine Spüldampfstrom strömt.
- Die niedrigeren Dampfstrombelastungen in den beiden Kolonnen erlauben kleinere Kolonnendurchmesser, welche mit Einsparungen von Material und Packungsvolumen verbunden sind. Die Verkleinerung des Durchmessers im Bereich der Kolonnen ist insbesonders vorteilhaft, wenn der Entgaser mit offenem unteren Ende über dem Speisewasserbehälter aufgesetzt wird.
- Durch den Einsatz einer Gegenstrom-Kolonne, einer Spüldampfzuführung unterhalb dieser Gegenstrom-Kolonne und der Entnahme des Absaugstroms oberhalb der Gegenstrom-Kolonne kann eine grössere Entgasungsleistung des Wassers ebenfalls ohne Gefahr der Flutgrenze erreicht werden.

In der Zeichnung sind anhand von Mischvorwärmern/Entgasern für Kraftwerksanwendung drei Ausführungsbeispiele der Erfindung schematisch dargestellt.
Es zeigen:
- Fig.1: einen Längsschnitt durch einen vertikal angeordneten Entgaser;
- Fig.2: eine erste Ausführungsvariante eines Entgasers gemäss Fig.1;
- Fig.3: eine zweite Ausführungsvariante eines Entgasers gemäss Fig.1.

Es sind nur die wesentlichen, für das Verständnis der Erfindung erforderlichen Elemente dargestellt. Gleiche Teile sind in den verschiedenen Figuren mit denselben Bezugszeichen versehen. Die Strömungsrichtung der beteiligten Medien sind mit Pfeilen bezeichnet.

Obwohl Mischvorwärmer/Entgaser in Struktur und Funktion hinlänglich bekannt sind, sei deren Problematik kurz erläutert: Die Entgasung bei gleichzeitiger Aufwärmung, wie sie typischerweise in Kraftwerksanlagen auftritt, zeichnet sich durch einige Besonderheiten aus. Zunächst verfügt man für die Aufwärmung über gesättigten Niederdruckdampf. Weiterhin ist im Sinne einer optimalen Nutzung der Wärme eine Drosselung des Dampfes und damit eine Veringerrung der zugehörigen Sättigungstemperatur unerwünscht. Die Folge davon ist der vom unterkühlten Kondensat abgesaugte Dampfmassenstrom, nur durch die Unterkühlung und den Massenstrom des Kondensates bedingt. Mit andern Worten, es stellt sich im Entgaser ein natürlicher Beharrungszustand ein, der nur von den Zuständen und der Stärke der involvierten Ströme abhängt, ohne die Einwirkung eines Regelkreises zur Kontrolle der genannten Wirkgrössen.

Die Austreibung der im Kondensat gelösten Gase geschieht zunächst auf rein thermodynamischer Basis, da die Absenkung des Druckes durch die Versprühung und die Erhöhung der Temperatur des Kondensates durch die Aufwärmung mit Dampf eine Verminderung der Sättigungswerte der gelösten Gase hervorruft (Sprudeleffekt). Dadurch übersteigt der Partialdruck der gelösten Gase den herrschenden Gesamtdruck. Der massgebende Anteil der Entgasung geschieht jedoch normalerweise auf rein stoffkinetischer Basis durch diffusen Transport der gelösten Gase über die Gas/Flüssigkeitsgrenzschicht. Dieser Transportprozess kann erst nach Erreichen eines thermischen Gleichgewichtes stattfinden.

Die Entfernung der in der Gasphase befindlichen Gase ist nur dann möglich, wenn ein Anteil des eingeführten und mit den ausgetriebenen Gasen angereicherten Dampfes in ein Gefäss bei einem niedrigeren Druck- normalerweise ein Kondensator - abgelassen wird.

Hinsichtlich dieser Problematik sind Aufbau und Funktionsweise solcher Apparate zur Entgasung soweit bekannt.

Gemäss der Erfindung ist nunmehr die weitgehend gegen Packungsüberflutung unempfindliche Kombination einer Gleichstromschaltung mit anschliessender Gegenstromschaltung gewählt.

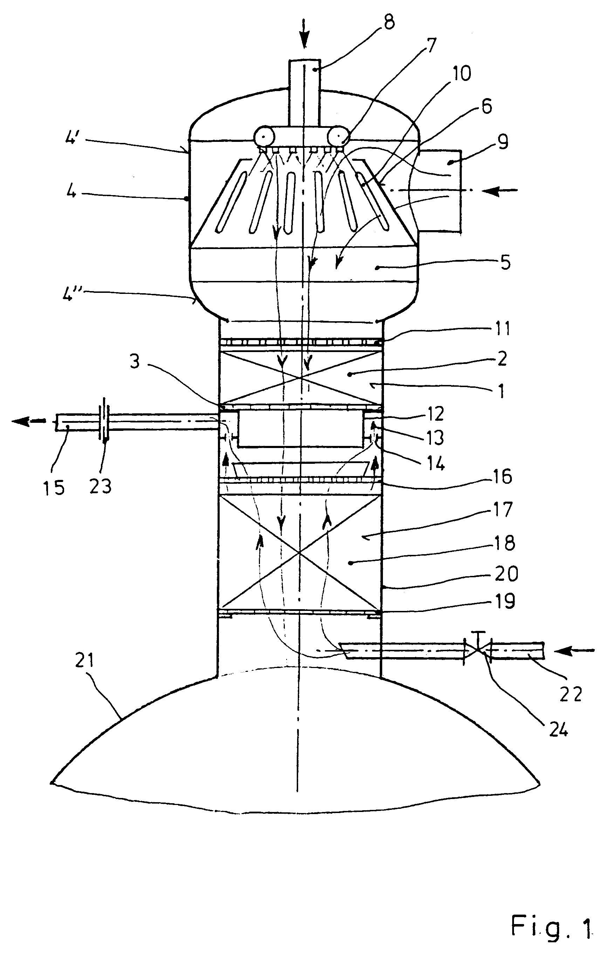

Der neue Apparat gemäss Fig.1 setzt sich im wesentlichen aus folgenden Teilen zusammen:
- Eine erste zylindrische Kolonne 1 enthält geschichtete Füllkörper 2, nachstehend Packung genannt. Dabei kann es sich um eine Schüttung handeln, also um eine sogenannte ungeordnete Füllung (random packing). Besser geeignet ist eine geordnete Füllung (regular packing), welche die Vorzüge einer höheren Trennleistung bei geringerem Druckabfall durch homogen gezielte Verteilung bietet. Als Material für solche an sich bekannten Packungen können Edelstahl, Keramik oder Kunstoffgewebe verwendet werden, die sich alle durch eine gute Benetzbarkeit bei wässrigen Systemen auszeichnen. Diese erste Packung ist zumindest an ihrem untersten Ende durch einen Packungsrost 3 in der Kolonne gehalten.
- Auf die vertikal aufgestellte erste Kolonne 1 ist ein erstes Gehäuse 4 mit gegenüber der Kolonne grösserem Durchmesser aufgesetzt. Es schliesst oben mit einem Dom ab. Der obere Gehäuseteil 4' ist von zylindrischer Form, der untere Gehäuseteil 4'' ist verjüngt zwecks Anpassung an den Durchmesser der Kolonne 1. Innerhalb des zylindrischen Gehäuseteils 4' ist eine Mischkammer 5 gebildet, deren kegelförmige Begrenzungswand 6 mit ihren grösseren Durchmesser bündig ist mit dem zylindrischen Gehäuseteil 4'.

Im Bereich des kleineren Durchmessers der kegelförmigen Begrenzungswand, d.h. unmittelbar oberhalb davon ist ein Wassereinspritzsystem angeordnet. Es handelt sich um ringförmig angeordnete Spritzdüsen 7, die aus einer den Dom des Gehäuses durchdringenden Wasserzufuhrleitung 8 gespiesen werden. Der Spritzwinkel der Düsen entspricht vorzugsweise dem Kegelwinkel der Begrenzugswand 6. Das unterkühlte Wasser, im vorliegenden Fall Kondensat mit hoher O₂-Konzentration, wird über diese Düsen in der Mischkammer versprüht.

In den oberen Gehäuseteil 4' mündet eine Dampfzufuhrleitung 9. Der Dampf verteilt sich innerhalb des Doms oberhalb der Begrenzungswand 6. In dieser Begrenzungswand sind über den ganzen Umfang und die Höhe verteilte Oeffnungen 10 in Form von längsgerichteten Schlitzen vorgesehen. Der Dampf, der zur Aufwärmung und Entgasung dient, bläst durch diese Schlitze konzentrisch nach innen in den Mischraum und vermischt sich mit dem unterkühlten, eingedüsten Kondensat. Durch die dabei stattfindende Erwärmung, die jedoch unterhalb der Sättigung für den in der Mischkammer herrschenden Druck bleibt, wird ein Teil der im Kondensat gelösten Gase ausgetrieben (Sprudeleffekt).

Das Kondensat, das an den verjüngten Wänden des Gehäuseteils 4'' nach unten rinnt, wird in einen Verteiler 11 der ersten Packung geleitet. Dieser Verteiler ist genau oberhalb der Packung 2 vorgesehen. Es handelt sich dabei in der Regel um ein Kanalsystem, in welchem das herabrinnende aufgewärmte Wasser aufgefangen und über den zylindrischen Querschnitt der Kolonne 1 verteilt wird. An dieser Stelle sei vermerkt, dass bei einer grossen Anzahl von Sprühdüsen bzw. bei sehr guter Wasserverteilung auf den Verteiler verzichtet werden kann.
- Das Wasser und der Dampf strömen durch mehrere Schichten der ersten Kolonne im Gleichstrom parallel nach unten. In der Packung wird die restliche Unterkühlung des Wassers eliminiert. Hierfür ist nur ein kleiner Teil der Packungshöhe notwendig. Nach dem Erreichen des thermischen Gleichgewichtes, d.h. der Sättigungstemperatur findet der Entgasungsvorgang in der Säule auf rein stoffkinetischer Basis statt.
- Unmittelbar unterhalb der Gleichstromkolonne ist eine an der Gehäusewandung umlaufende Schutzwand 12 untergebracht, welche einen vor dem herabregnenden Wasser geschützten Entlüftungsringraum 13 bildet. An der unteren Seite des allseits geschlossenen Entlüftungsringraums ist eine Anzahl von Bohrungen 14 für die Entlüftung vorgesehen. Aussen am Gehäuse mündet eine Entlüftungsleitung 15 in den Ringraum 13.
- Stromabwärts des Entlüftungsringraums wird das herunterfliessende Wasser wiederum mittels eines Siebes bzw. Verteilers 16 über dem Querschnitt gleichmässig verteilt.
- Unterhalb des Verteilers 16 ist der zweite Teil der neuen Kolonnenanordnung untergebracht. Im vorliegenden Beispiel handelt es sich um eine zweite Kolonne 17, die ebenfalls geschichtete Füllkörper 18 enthält und an ihrem unteren Ende durch einen Packungsrost 19 gehalten wird. Die ebenfalls zylindrisch ausgebildete Kolonne 17 weist den gleichen Durchmesser auf wie die erste Kolonne. Dies ist jedoch keineswegs zwingend. Diese zweite Kolonne 17 ist in Gegenstromschaltung konzipiert, d.h. das vorgewärmte und teilweise entgaste Wasser strömt in der Säule nach unten und der Spüldampf strömt im Gegenstrom nach oben. In dieser Säule wird die restliche Gasmenge aus dem Wasser eliminiert.

Die erforderliche Höhe der Gegenstromsäule ist von der Eintrittskonzentration sowie von der gewünschten Austrittskonzentration des Wassers abhängig. Da durch die Gegenstromsäule nur ein kleinerer Spüldampfmassenstrom nach oben gegen das nach unten fliessende Wasser strömt, ist keine Gefahr der Ueberflutung vorhanden.
- Die zweite Kolonne 17 sitzt auf einem zweiten Gehäuse 20 auf, dessen unterstes Ende auf dem lediglich angedeuteten Speisewasserbehälter 21 aufrechtsteht. Es versteht sich, dass bei isolierter Anordnung des Apparates dieser mit einem Boden versehen sein muss, wobei vorzugsweise in diesem Boden, d.h. am tiefsten Punkt des Apparates, Wasserabführleitungen für das entgaste und aufgewärmte Kondensat vorzusehen sind.

In dieses zweite Gehäuse 20 mündet eine Spüldampfzufuhrleitung 22, welche im vorliegenden Fall von der Dampfzufuhrleitung 9 abzweigen kann. Selbstverständlich kann der erforderliche Spüldampf aber auch von einer anderen Dampfleitung der Anlage, beispielsweise einer solchen mit höherem Druck entnommen werden.

In geraffter Form funktioniert der Apparat folgendermassen: Das unterkühlte Wasser und der Heizdampf werden oben in den Mischraum des Apparates eingeführt, wobei das Wasser durch Düsen oder ein Sprühventil eingespritzt wird. Das Wasser und der Dampf durchströmen die erste Kolonne in Gleichstromführung zwecks Aufwärmung und Entgasung des Wassers. Das Wasser und der unterhalb einer zweiten Kolonne eingeführte Spüldampf durchströmen diese zweite Kolonne in Gegenstromführung zur weiteren Entgasung des Wassers. Der Absaugstrom wird zwischen den beiden Kolonnen entnommen.

Bei diesem Absaugstrom handelt es sich demnach in der Regel um den mit Luft angereicherten Spüldampfmassenstrom, der durch den Entlüftungsringraum 13 und die Entlüftungsleitung 15 zum nicht gezeigten Sauger oder Kondensator gefördert wird.

Der benötigte Massenstrom des Sauggemisches ist von der Eintrittskonzentration des Sauerstoffes im Wasser sowie von der gewünschten Austrittskonzentration desselben abhängig. Ein Absaugdampfstrom kann 20-50 mal wie dem maximal möglichen Luftgehalt im Wasser am Eintritt gewählt werden, wobei der Luftgehalt im Wasser aus der O2-Konzentration und dem Wassermassenstrom ermittelt wird. Für die Entgasung von luftgesättigtem Wasser ist ein Absaugstrom des Gas/Dampf-Gemisches bis zu ca. 0,003 des Wassermassenstromes, bzw. bei einer grossen Aufwärmung bis ca. 3 % des Heizdampfmassenstromes notwendig. Der Massenstrom des Sauggemisches wird mit Hilfe einer Entlüftungsblende 23 in der Entlüftungsleitung 15 reguliert.

Der Spüldampfmassenstrom soll möglichst nahe dem Massenstrom des Absauggemisches liegen, vorzugsweise bei 0,6-1,2. Ein Teil des Absaugstromes kann auch vom oberen Heizdampf entnommen werden. Falls der Spüldampfstrom in der Spüldampfzufuhrleitung 22 etwas grösser als der Absaugstrom in der Entlüftungsleitung 15 ist, wird der Differenzdampfstrom am Ende der Gleichstromsäule 1 kondensieren. Für den kleineren Spüldampfstrom wird eine gegenüber der Dampfzufuhrleitung 9 entsprechend dünnere Rohrleitung 22 gewählt, welche mit einem Spüldampfventil 24 zur Begrenzung bzw. Regulierung des Dampfstromes ausgerüstet ist. Für eine bessere Entgasungsleistung des Apparates ist eine Optimierung bzw. Anpassung der beiden Ströme (Spüldampfstrom und Absaugstrom) an die Eintritts- und Austrittskonzentration des Wassers mit Hilfe der Entlüftungsblende 23 und dem Spüldampfventil 24 zweckmässig.

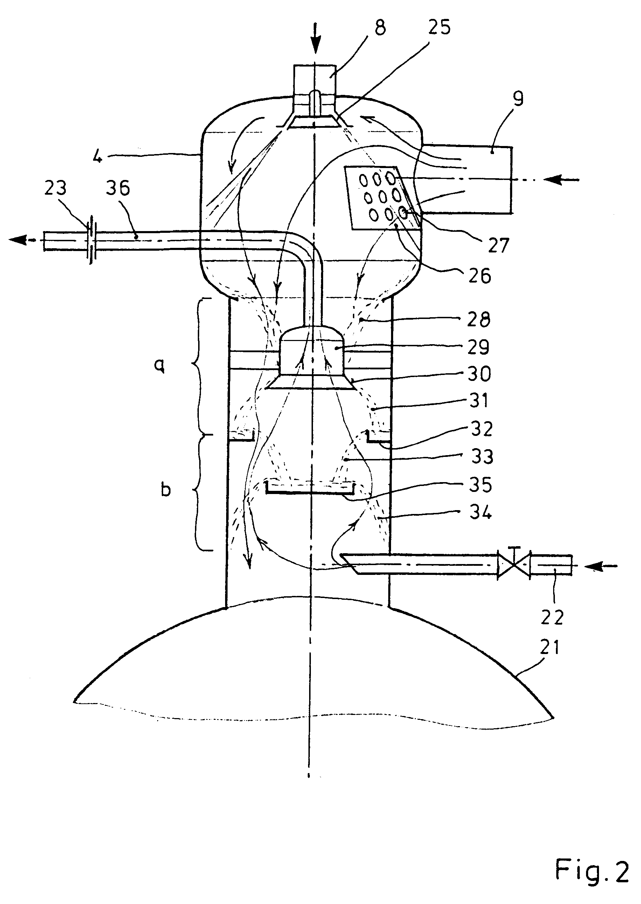

Abweichend von Fig. 1 bestehen in der Ausführungsform nach Fig.2 die Sprühmittel aus einem eigentlichen Sprühventil 25, welches das aufzuheizende Wasser innerhalb einer kegeligen Verteilerwand 26 versprüht. Bei letzterer handelt es sich um eine gewölbte Prallplatte mit Perforationen 27 für den Dampf. Das Wasser wird gegen den zylindrischen oberen Gehäuseteil 4' gespritzt und rinnt an den verjüngten Wänden des unteren Gehäuseteils 4'' nach unten. Die verjüngten freien Enden dieses Gehäuseteils 4'' sind etwas eingezogen, d.h. sie weisen einen etwas kleineren Durchmesser auf als die Kolonne. Dadurch entsteht ein rundum geschlossener Wasserschirm 28 , welcher vom Dampf durchdrungen werden muss. Dieser Wasserschirm bildet bereits einen Teil der ersten, im Gleichstrom durchquerten Kolonne (a). Der Wasserschirm prallt auf eine zentrale Haube 29, rinnt über deren Spreizkragen 30 abwärts unter Bildung eines weiteren Schirmes 31, welcher sich in eine an der Gehäusewand umlaufende Wasserrinne 32 ergiesst. Bis hierhin reicht die erste Kolonne (a). Die zweite, vom Spüldampf im Gegenstrom durchquerte Kolonne (b), beginnt mit dem Ueberlauf der genannten Rinne 32 und setzt sich ebenfalls zusammen aus 2 Wasserschirmen 33 und 34, die mittels einer zentralen Auffangrinne 35 unterteilt sind. Auch hier wird der Absaugstrom zwischen den beiden Kolonnen (a) und (b) entnommen. Hierzu ist die Zentralhaube 29 hohl ausgebildet und die Entlüftungsleitung 36 durchdringt das obere Gehäuse 4 an geeigneter Stelle, um in den Kopf der Zentralhaube zu münden.

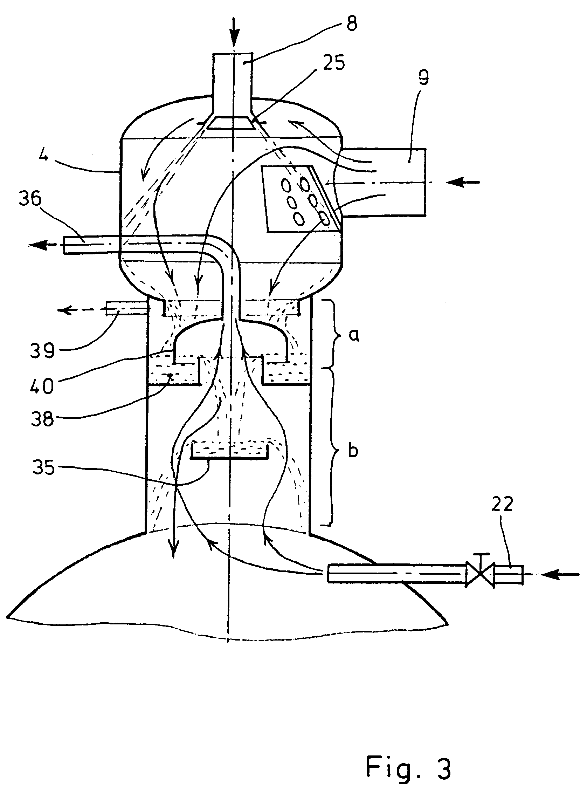

In Fig.3 schliesslich ist ein Sonderfall des Apparates nach Fig.2 dargestellt. Am Ende der Gleichstromkolonne (a) ist ein Siphon 38 mit zwei Wasserspiegeln angeordnet. Dadurch werden die beiden Dampfströmungen, d.h. der von oben kommende Heizdampf und der von unten kommende Spüldampf vollständig voneinander getrennt. Bei dieser Lösung wird das im Anschluss an die erste Kolonne anfallende Gas/Dampfgemisch über eine separate Entlüftungsleitung 39 abgezogen, während der im Gegenstrom zum Wasser geführte Spüldampf ins Innere der hier mit wesentlich grösserem Durchmesser konzipierten Haube 40 abströmt.

In Kraftwerkanlagen wird der Entgaserdruck nicht geregelt. Der abgesaugte Dampfmassenstrom ist durch die Unterkühlung und den Wassermassenstrom bedingt. Es stellt sich im Entgaser ein natürlicher Beharrungszustand ein. Der Entgaserdruck wird praktisch gleich dem Anzapfdampfdruck. In speziellen Anlagen können eine Entgaserdruckregelung und ein Dampfregelventil eingesetzt werden, wenn der Entgaserdruck unter dem Heizdampfdruck liegen soll oder wenn eine Dampfdrosselung erlaubt ist.

Selbstverständlich ist die Erfindung nicht auf die gezeigten und beschriebenen Apparate beschränkt. Als Sonderfall der Apparate nach den Fig.1 und 2 ist es beispielsweise möglich, bei einem Apparat die erste (Gleichstrom-) Kolonne mit Einbauten gemäss Fig.2 zu versehen und die zweite (Gegenstrom-) Kolonne mit Füllkörpern gemäss Fig.1 auszurüsten.

Desweiteren ist es möglich, beispielsweise das warme und teilentgaste Kondensat und das in der Regel kältere und luftgesättigte Zusatzwasser nicht über eine gemeinsame Leitung in den Apparat einzuführen, sondern an zwei verschiedenen Stellen in den Mischraum einzudüsen. Dies geschieht vorzugsweise derart, dass das Kondensat in den unteren Teil des Mischraumes eingeleitet wird und somit den oberen Teil und den Dom des Gehäuses freihält für die Aufwärmung des dort eingeführten Zusatzwassers.

## Patentansprüche

1. Apparat zur Aufwärmung und Entgasung von Wasser mittels Dampf, im wesentlichen bestehend aus einer in einem Gehäuse (4, 20) untergebrachten Kolonnenanordnung (1, 17, a, b), mit einer oberhalb der Kolonnenanordnung ins Gehäuse mündenden Wasserzufuhrleitung (8) für das aufzuheizende und zu entgasende Wasser, sowie mit je einer ins Gehäuse mündenden Dampfzufuhrleitung (9) für den Heizdampf und Entlüftungsleitung (15, 36, 39 ) für das abzusaugende Gas/Dampfgemisch, dadurch gekennzeichnet,
- dass die Dampfzufuhrleitung (9) ebenfalls oberhalb der Kolonnenanordnung (1, 17, a, b) im Gehäuse (4) angeordnet ist und in einen Mischraum (5) mündet, in dem Sprühmittel (7, 25) für das Wasser vorgesehen sind;
- dass unterhalb des Mischraumes (5) eine erste im Gleichstrom beaufschlagte Kolonne (1, a) angeordnet ist;
- dass in Wasserfliessrichtung gesehen, unterhalb der ersten Kolonne (1) eine zweite Kolonne (17, b) vorgesehen ist;
- dass unterhalb der zweiten Kolonne (17, b) eine Spüldampfzufuhrleitung (22) in das Gehäuse (20) mündet, so dass die zweite Kolonne (17, b) im Gegenstrom beaufschlagt ist;
- und dass die Entlüftungsleitung (15, 36, 39) zwischen den beiden Kolonnen (1, a, resp. 17, b) in das Gehäuse mündet.

2. Apparat nach Patentanspruch 1, dadurch gekennzeichnet, dass die Kolonnenanordnung (1, 17, a, b) zylindrisch ausgebildet ist.

3. Apparat nach Patentanspruch 1, dadurch gekennzeichnet, dass an mindestens einem Kolonnenkopf ein Wasserverteiler (11, 16) angeordnet ist.

4. Apparat nach Patentanspruch 1, dadurch gekennzeichnet, dass als Sprühmittel ein Sprühventil (25) oder Spritzdüsen (7) zur Anwendung gelangen.

## Claims

1. Apparatus for heating and degassing water by means of steam, essentially consisting of a column array (1, 17, a, b) accommodated in a housing (4, 20) and having a water feed line (8), leading above the column array into the housing, for the water which is to be heated and degassed, and having one steam feed line (9), leading into the housing, for the heating steam and one deaeration line (15, 36, 39) for the gas/steam mixture which is to be extracted, characterised in that
- the steam feed line (9) is also arranged above the column array (1, 17, a, b) in the housing (4) and leads into a mixing chamber (5) in which spray means (7, 25) for the water are provided,
- a first column (1, a) charged in co-current is arranged below the mixing chamber (5),
- a second column (17, b) is provided below the first column (1), as viewed in the direction of water flow,
- a flushing steam feed line (22) leads into the housing (20) below the second column (17, b), so that the second column (17, b) is charged in counter-current,
- and the deaeration line (15, 36, 39) leads between the two columns (1, a and 17, b, respectively) into the housing.

2. Apparatus according to Claim 1, characterised in that the column array (1, 17, a, b) is of cylindrical shape.

3. Apparatus according to Claim 1, characterised in that a water distributor (11, 16) is arranged on at least one column top.

4. Apparatus according to Claim 1, characterised in that a spray valve (25) or spray nozzles (7) are used as the spray means.

## Revendications

1. Appareil pour le réchauffage et le dégazage d'eau au moyen de vapeur, se composant essentiellement d'un ensemble de colonnes (1, 17, a, b) disposé dans une enceinte (4, 20), avec une conduite d'arrivée d'eau (8) débouchant dans l'enceinte au-dessus de l'ensemble de colonnes pour l'eau à réchauffer et à dégazer, ainsi qu'avec une conduite d'arrivée de vapeur (9) pour la vapeur de chauffage et une conduite d'évacuation (15, 36, 39) pour le mélange gaz/vapeur à aspirer, débouchant toutes deux dans l'enceinte, caractérisé en ce que
- la conduite d'arrivée de vapeur (9) est également disposée dans l'enceinte (4) au-dessus de l'ensemble de colonnes (1, 17, a, b) et débouche dans une chambre de mélange (5), dans laquelle il est prévu des moyens de pulvérisation (7, 25) pour l'eau; en ce que
- en dessous de la chambre de mélange (5) est disposée une première colonne (1, a) alimentée par des courants parallèles; en ce que
- vu dans le sens de l'écoulement de l'eau, il est prévu une seconde colonne (17, b) en dessous de la première colonne (1); en ce que
- en dessous de la seconde colonne (17, b), une conduite d'arrivée de vapeur de balayage (22) débouche dans l'enceinte (20), de telle sorte que la seconde colonne (17, b) est alimentée à contre-courant; et en ce que
- la conduite d'évacuation (15, 36, 39) débouche dans l'enceinte entre les deux colonnes (1, a, respectivement 17, b).

2. Appareil suivant la revendication 1, caractérisé en ce que l'ensemble de colonnes (1, 17, a, b) est de forme cylindrique.

3. Appareil suivant la revendication 1, caractérisé en ce qu'un distributeur d'eau (11, 16) est disposé à au moins une tête de colonne.

4. Appareil suivant la revendication 1, caractérisé en ce qu'une soupape de pulvérisation (25) ou des gicleurs (7) sont utilisés en guise de moyens de pulvérisation.
